# FASCICULE DE BREVET EUROPEEN

(11) **EP 2 349 819 B1**
(45) Date de publication et mention de la délivrance du brevet: **06.07.2016**
(21) Numéro de dépôt: 09760215.5
(22) Date de dépôt: 26.10.2009
(51) Int. Cl.: B62D 25/10, B62D 65/06

(54) **DOUBLURE DE CAPOT DE VEHICULE**
AUSKLEIDUNG EINER MOTORHAUBE EINES KRAFTFAHRZEUGES
LINING OF A HOOD OF A VEHICLE

(30) Priorité: 27.10.2008 FR 0857290
(43) Date de publication de la demande: 03.08.2011
(73) Titulaire: Compagnie Plastic Omnium, 69007 Lyon (FR)
(72) Inventeur: ROCHEBLAVE, Laurent, F-69100 Villeurbanne (FR); MARTIN, Laurent, F-07340 Peaugres (FR); CHERON, Hugues, F-01800 Meximieux (FR)
(74) Mandataire: Descazeaux, Charles
(86) Numéro de dépôt international: PCT/FR2009/052055
(87) Numéro de publication internationale: WO 2010/049632

(56) Documents cités:
- EP-A- 0 382 013
- DE-A1-102005 030 103
- FR-A- 2 915 168
- JP-A- 11 198 858
- JP-A- 2008 007 064
- US-A- 5 535 841

## Description

La présente invention concerne un capot de véhicule.

On connaît déjà un capot de véhicule comprenant une peau et une doublure superposées. La peau est essentiellement plane et la doublure comprend une dépression s'étendant essentiellement selon la direction transversale du véhicule lorsque le capot est monté sur le véhicule, à l'extrémité arrière du capot, cette dépression étant conformée pour former un corps creux en combinaison avec la peau de capot.

On connaît notamment le document US5535841A qui décrit une doublure de capot de véhicule conforme au préambule de la revendication 1.

La doublure est réalisée en un matériau thermodurcissable tel que le SMC (Sheet Moulding Compound), alors que la peau est réalisée en métal, tel que l'aluminium.

La peau et la doublure du capot sont reliées à leurs extrémités respectives, par collage et sertissage et sont ensuite montées sur le véhicule.

Toutefois, en raison des propriétés intrinsèques aux deux types de matériaux les constituant, la peau et la doublure ont un comportement très différent vis-à-vis de la chaleur. Ainsi, le capot a tendance à se déformer lorsque la température augmente ce qui est dû à la dilatation différentielle de la peau et de la doublure constituant ensemble le capot. Cela est notamment gênant lors du passage en cataphorèse de la caisse, lors duquel la caisse avec le capot monté sur celle-ci sont immergés dans un bain puis passés dans une étuve à très haute température. En effet, dans cette étuve, la peau se dilate plus que la doublure, assemblée à la peau à chacune de ses extrémités, ce qui engendre une déformation du capot. En outre, s'il est prévu de faire réticuler la colle lors du passage du capot dans l'étuve, la peau et la doublure sont immobilisées l'une par rapport à l'autre dans une configuration déformée du capot, ce qui n'est pas satisfaisant, car il n'y a pas de retour possible à la géométrie normale du capot après refroidissement.

Le problème de déformation rémanente liée à la dilatation différentielle est analogue dans le cas d'une peau et d'une doublure réalisées en d'autres matériaux. En particulier, ce problème existe également pour une peau en acier et une doublure en thermoplastique, à ceci près que, dans ce cas, doublure se dilate plus que la peau.

L'invention a pour but de remédier à ces inconvénients en fournissant une doublure permettant de limiter, voire d'éviter, la déformation du capot après passage à haute température et refroidissement.

A cet effet, l'invention a pour objet une doublure de capot de véhicule présentant au moins une dépression allongée, de préférence le long d'un bord de la doublure, la dépression présentant, à distance de ses extrémités, au moins une singularité ne se reproduisant pas à la fois à l'identique et de façon continue sur toute la longueur de la dépression. La singularité est une singularité de matériau. La dépression comprend une première portion réalisée en un premier matériau et définissant au moins un orifice et une deuxième portion réalisée en un deuxième matériau différent du premier et surmoulée dans au moins un des orifices.

La deuxième portion est de préférence réalisée dans le même matériau que la peau du capot. Une doublure présentant une singularité de matériau, notamment lorsque l'un des deux matériaux est métallique ou plastique renforcé fibres de verre, présente une très bonne rigidité, ce qui permet d'augmenter la tenue de la doublure pour diminuer l'affaissement de celle-ci sous l'effet de son poids propre lors du passage en cataphorèse. En outre, lorsque la forme et le matériau de la deuxième portion sont correctement choisis, ils permettent d'aider la dépression à se dilater autant que la peau. Par exemple, dans le cas d'un capot composé d'une peau aluminium et d'une doublure présentant une première portion en matière plastique, par exemple en SMC, et une deuxième portion en aluminium, la deuxième portion de la dépression a en effet tendance à plus se dilater que la première portion et à permettre une dilatation de la doublure qui se rapproche plus de celle de la peau pour éviter la déformation du capot. Il est également possible que la deuxième portion présente une forme emboutie et soit superposée avec la première portion de la dépression.

La singularité est bien entendu présente à l'état initial de la doublure et une doublure de capot ayant subi un choc et présentant une singularité uniquement du fait de ce choc ne constitue pas une doublure selon l'invention.

Une telle singularité modifie localement la section de la dépression. Un orifice ou un relief forment de telles singularités. En revanche, une arête ou un angle rentrant de la dépression, formant intersection entre deux parois de la dépression, est une singularité mais elle se reproduit à l'identique de façon continue sur toute la longueur de la dépression.

La dépression étant la partie la plus rigide de la doublure, elle guide la déformation de celle-ci.

Ainsi, en ménageant au moins une singularité dans la dépression, par exemple un orifice, la ou les parois de la dépression ne sont pas pleines et continues, comme cela est le cas dans l'état de la technique, ce qui facilite la déformation de la doublure.

La doublure de capot suit donc plus facilement la dilatation de la peau et la déformation induite dans le capot par la dilatation différentielle est ainsi diminuée.

De ce fait, lorsque la peau et la doublure sont reliées par de la colle, si la colle est réticulée durant le passage du capot dans l'étuve de cataphorèse, la déformation du capot étant moindre, le positionnement relatif de la peau et la doublure lors de l'immobilisation de celles-ci l'une par rapport à l'autre est satisfaisant.

L'invention permet également d'atteindre ce résultat dans le cas où la doublure se déforme plus que la peau.

En outre, la déformation du capot étant moindre, si la peau et la doublure sont déjà immobilisées, la colle qui les relie étant réticulée, lorsqu'elles passent dans l'étuve de cataphorèse, les contraintes subies par la doublure sont moindres et la tenue du capot dans le temps est meilleure.

L'invention permet également, lorsque la peau et la doublure sont reliées par collage, de diminuer les contraintes en cisaillement apparaissant dans la colle ou à l'interface entre la colle et la peau ou la doublure du fait de la déformation du capot lors du passage en cataphorèse de celui-ci et donc d'améliorer la fixation de la peau et de la doublure.

L'invention présente également une ou plusieurs des caractéristiques de la liste ci-dessous :
- la singularité est une singularité de forme, la dépression étant de préférence conformée de sorte que, si on définit une surface enveloppe suivant la dépression et ayant une section transversale de référence constante, la partie de la dépression superposée à l'enveloppe présente au moins une interruption ou un orifice,
- au moins une paroi de la dépression présente au moins un orifice. Un tel orifice, du fait de l'espace vide qu'il forme dans la paroi, facilite la déformation de la doublure et diminue les contraintes subies par celle-ci. Cet orifice est notamment avantageux pour absorber la dilatation en compression de la doublure. En effet, lors du passage de la doublure en cataphorèse, la tenue de celle-ci est dégradée du fait de la haute température et la doublure a tendance à s'affaisser sous l'effet de son poids propre. Cet effet s'oppose à la dilatation thermique du capot et certaines parties de la doublure sont sollicitées en compression du fait de ce phénomène. La présence des orifices permet donc d'autoriser une déformation accrue de la doublure, plus particulièrement en compression, et de diminuer les contraintes engendrées dans celle-ci par son affaissement. Ces orifices permettent également de positionner et maintenir des câbles sur la doublure,
- en particulier, la dépression comprend au moins deux parois et une ligne à l'intersection de ces deux parois, l'orifice interrompant la ligne. Ceci est particulièrement avantageux car les contraintes dues à la déformation du capot sont particulièrement concentrées au niveau des arêtes et angles rentrants de la dépression. Un tel orifice "casse" la géométrie de ces éléments et permet d'autoriser plus facilement la déformation de la doublure et de diminuer les contraintes subies par celle-ci,
- au moins une paroi de la dépression comprend au moins un relief en saillie ou en creux. En particulier, le relief comprend au moins une arête ou un angle rentrant et est conformé de préférence en créneau. La présence d'une arête ou d'un angle rentrant en saillie ou en creux relativement à la paroi principale de la dépression permet à la doublure de se plier ou de se déplier au niveau de cette arête ou de cet angle rentrant. Cela facilite donc la déformation de la dépression et, par conséquent, de la doublure, diminuant ainsi les contraintes engendrées dans celle-ci du fait de la dilatation différentielle. En outre, avec de tels reliefs, les propriétés de rigidification du corps creux formé à l'aide de la dépression sont meilleures que lorsque la singularité de forme est formée par un orifice,
- la dépression comprend au moins deux parois et une ligne à l'intersection de ces deux parois, le relief étant contigu à la ligne. Une telle conformation de la doublure permet de diminuer les contraintes au niveau des arêtes ou angles rentrants de la dépression, zone dans laquelle elles sont particulièrement concentrées,
- le premier matériau est un matériau plastique, notamment un matériau thermodurcissable tel que le SMC (acronyme anglais de Sheet Moulding Compound), alors que le deuxième matériau est un matériau métallique, tel que l'aluminium ou l'acier,
- le premier matériau est un matériau plastique, notamment choisi parmi un matériau thermoplastique à base de polypropylène ou de polyamide et éventuellement renforcé de fibres de verre, alors que le deuxième matériau est choisi parmi un matériau métallique, tel que l'aluminium ou l'acier, un matériau plastique distinct du premier matériau et un matériau composite métal-plastique et/ou comprenant du carbone ou du magnésium,
- la dépression s'étend essentiellement selon la direction transversale du capot, de préférence le long de son bord arrière,
- la doublure est dimensionnée pour être superposée à la peau sur essentiellement toute la surface de la peau. En particulier, la doublure comprend une pluralité de dépressions allongées de direction longitudinales distinctes,
- la dépression comprend au moins deux, de préférence au moins trois singularités, ce qui permet d'optimiser l'influence des singularités sur le comportement du capot en cas de dilatation de celui-ci,
- la dépression présente une première épaisseur dans une zone contiguë au relief alors que le relief présente une deuxième épaisseur inférieure à la première épaisseur. En diminuant l'épaisseur du relief, on facilite encore la déformation de la doublure,
- la doublure comprend, en saillie d'une paroi de la dépression, une nervure s'étendant de préférence essentiellement verticalement et vers le bas lorsque la doublure est montée sur le véhicule, la nervure portant en particulier un joint d'étanchéité à une extrémité libre. Ainsi, la nervure permet également d'empêcher, ou au moins de limiter, l'affaissement de la doublure dû à son poids propre, car elle est en appui sur des pièces appartenant à la caisse du véhicule, ce qui permet le maintien en position du capot. Le joint d'étanchéité permet en outre d'effectuer l'étanchéité dans la zone d'auvent du capot, lorsque la dépression est située en partie arrière du capot et s'étend selon la direction transversale de celui-ci, pour mettre en place une séparation hermétique entre l'habitacle du véhicule et le compartiment moteur de celui-ci.

L'invention a également pour objet un capot de véhicule comprenant :
- une doublure conforme à l'invention,
- une peau réalisée dans un matériau métallique tel que l'acier, de l'aluminium ou un matériau hybride métal/plastique.

En outre, la doublure et la peau du capot selon l'invention peuvent être solidarisées à chacune des extrémités de la dépression.

Optionnellement, le deuxième matériau de la doublure est le même que celui constituant la peau.

L'invention a également pour objet un procédé de fabrication d'une doublure de véhicule, dans lequel on fabrique la doublure de sorte que celle-ci présente une dépression allongée, de préférence le long d'un bord de la doublure et que cette dépression présente, à distance de ses extrémités, au moins une singularité ne se reproduisant pas à l'identique et de façon continue sur toute la longueur de la dépression. Un tel procédé permet de fabriquer la doublure selon l'invention.

Optionnellement, la doublure étant destinée à être moulée à l'aide d'un premier matériau, on place dans un moule de fabrication de la doublure un élément réalisé en un deuxième matériau, notamment un matériau métallique, de sorte que cet élément forme une portion de la dépression, une fois la doublure moulée. En surmoulant ainsi un élément en un matériau différent, ce matériau étant de préférence le même que celui de la peau, on peut influer sur la dilatation de la doublure et diminuer la dilatation différentielle du capot et la déformation de celui-ci en raison de fortes températures.

Avantageusement, le deuxième matériau est différent du matériau de la peau, mais choisi de telle manière que le comportement global de la doublure en dilatation soit très proche de celui de la peau.

L'invention sera mieux comprise à la lecture de la description qui va suivre, donnée uniquement à titre d'exemple et faite en se référant aux dessins dans lesquels :
- la figure 1A est une vue schématique de dessus d'une doublure selon un mode de réalisation de l'invention,
- la figure 1B est une vue en perspective d'une partie de la doublure de la figure 1A,
- la figure 2 est une vue en coupe selon le plan II-II de la doublure de la figure 1B, lorsque celle-ci est assemblée avec la peau,
- la figure 3 est une vue en perspective d'un détail d'une doublure selon un deuxième mode de réalisation de l'invention,
- la figure 4 est une vue en perspective d'un détail d'une doublure selon un troisième mode de réalisation de l'invention,
- la figure 5 est une vue en perspective d'un détail d'une doublure selon un quatrième mode de réalisation de l'invention,
- la figure 6 est une vue en coupe d'un capot comprenant une doublure selon un cinquième mode de réalisation de l'invention.

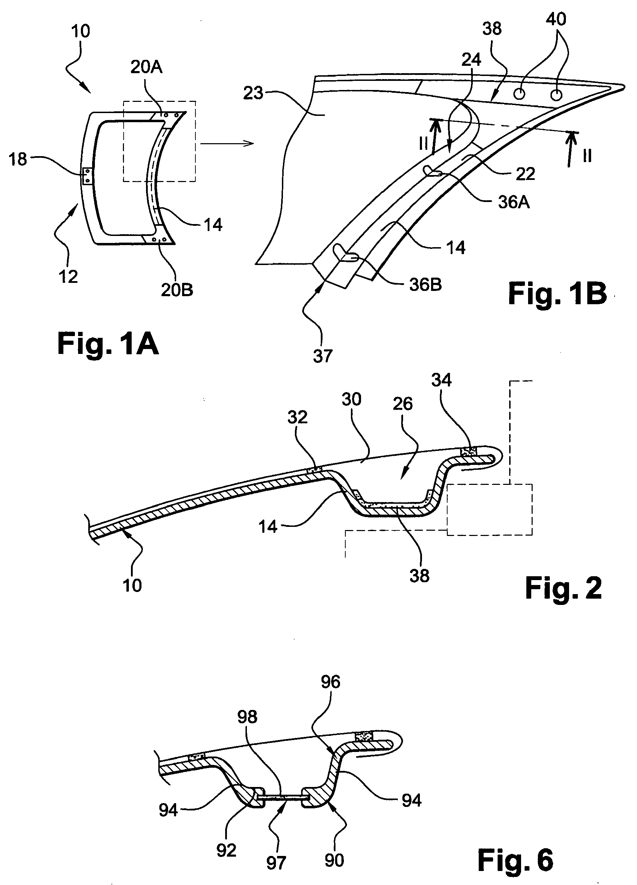

On a représenté sur la figure 1A une vue schématique d'une doublure de capot 10 destinée à s'entendre essentiellement sur toute la surface du capot et donc à doubler la peau sur essentiellement toute la surface de celle-ci. Cette doublure comprend une dépression périphérique 12, comportant notamment une partie arrière 14 allongée s'étendant essentiellement selon la direction transversale du capot au voisinage de l'arrière du capot, notamment le long de son bord arrière. Cette dépression 12, notamment la partie 14, participe en grande partie à la rigidité du capot.

Comme on le voit également sur la figure 1A, la doublure comprend des emplacements 18, 20A et 20B constituant des points d'accroche du capot sur la caisse. L'emplacement 18 situé en partie avant de la dépression, au centre du bord avant de la doublure, permet d'accueillir une serrure et les emplacements 20A et 20B, situés chacun dans un coin arrière de la doublure, dans la dépression 14, permettent d'accueillir des charnières.

Comme on le voit plus particulièrement sur la figure 1B, représentant en détail un coin arrière de la doublure, la partie 14 de la dépression présente une section transversale en "U", dont la concavité est destinée à être tournée vers la peau de capot lorsque la peau et la doublure sont assemblées.

La dépression 14 comprend notamment une paroi de fond 22 essentiellement parallèle à une partie centrale 23 de la doublure 10 et deux parois latérales 24 reliant le fond 22 au reste de la doublure.

Comme on le voit sur la figure 2, lorsque la doublure 10 et une peau de capot 30 sont assemblées, la dépression 14 forme un corps creux 26 avec la peau de capot et définit une cavité conjointement à la peau. En outre, la peau et la doublure sont assemblées l'une à l'autre de chaque côté de la dépression à l'aide de mastic 32 le long d'un bord longitudinal de la doublure du côté de la dépression adjacent à la zone centrale de la doublure, ou d'une colle réticulable à l'humidité, éventuellement à chaud 34, le long de l'autre bord longitudinal de la doublure, adjacent au bord du capot. En outre, à l'extrémité de la doublure longeant la dépression, la peau et la doublure sont serties, c'est-à-dire que la peau est repliée pour enserrer la doublure. Aux extrémités de la dépression selon sa direction longitudinale, la peau et la doublure sont également solidarisées, notamment à l'aide de colle et d'un sertissage. La peau 30 est réalisée en un matériau métallique, tel que l'acier ou l'aluminium.

Comme on le voit sur la figure 6, la doublure présente une singularité de matériau. L'orifice 97 formé dans la matière plastique est en effet comblé par une deuxième portion 98 réalisée en un matériau métallique et agencée dans la doublure pour remplir l'orifice 97 formé dans la partie en matière plastique de la dépression. En particulier, comme on le voit sur la figure 6, cette deuxième portion est formée par une plaque métallique 98, la plaque métallique étant surmoulée sur la doublure de sorte que sa position relativement au reste de la doublure est parfaitement déterminée. On pourra prévoir plusieurs singularités de ce type sur la dépression. De cette façon, chaque plaque métallique, placée dans un orifice d'une portion plastique de la dépression, peut être choisie dans un matériau lui permettant de se dilater plus ou moins que la portion plastique de la dépression et dans une proportion choisie, de façon à ce que la doublure suive la dilatation de la peau de capot pendant l'étuvage de cataphorèse, lors duquel le capot est porté à haute température. Les plaques métalliques ménagées dans chacun des orifices sont à cet effet de préférence réalisées dans le même matériau que la peau de capot ou en un matériau qui se dilate plus que celle-ci.

Comme on le voit sur la figure 2, la dépression comprend également deux orifices 36A, 36B, formant des singularités de forme. Ces orifices sont ménagés à la fois dans la paroi de fond 22 et une paroi latérale 24 de la dépression, ici la paroi la plus proche de la zone centrale de la doublure. Ainsi, chacun des orifices interrompt une ligne 37, formant un angle rentrant marquant la limite entre la paroi de fond 22 et la paroi latérale 24.

Comme on le voit sur la figure 2, la doublure 10 comprend également, aux extrémités de la dépression 14 selon la direction longitudinale de celle-ci et dans les coins arrières de la doublure, un renfort 38, comprenant des orifices de fixation 40, visibles sur la figure 1B, permettant de rapporter sur la doublure les charnières par l'intermédiaire de vis de fixation.

Comme on le voit sur la figure 2, ce renfort est embouti pour présenter une section en "U" et être superposé à la dépression 14, à l'extrémité de celle-ci selon sa direction longitudinale.

La doublure, et notamment la dépression 14, est réalisée en un matériau plastique, notamment un matériau thermodurcissable tel que le SMC (Sheet Molding Compound), alors que le renfort est réalisé en un matériau métallique tel que l'aluminium ou l'acier, ce matériau étant de préférence le même que celui de la peau de capot.

Ainsi, lorsque le capot constitué de la doublure 10 et de la peau 30 passe en cataphorèse, notamment dans une étuve pour le séchage de la caisse suite à un bain de cataphorèse, le capot est porté à haute température et la peau et la doublure se dilatent. Toutefois, comme la peau et la doublure ne sont pas réalisées en un même matériau, il subsiste une dilatation différentielle entre ces deux éléments. En effet, la peau, lorsqu'elle est réalisée en aluminium se dilate beaucoup plus que la doublure lorsque celle-ci est réalisée en SMC.

Du fait des orifices formés dans la dépression, une déformation plus aisée de la doublure est autorisée. Celle-ci peut alors suivre plus facilement la déformation de la peau.

En outre, du fait de la présence du renfort 38 à l'intérieur de la dépression 14, réalisé en un matériau métallique et ayant donc tendance à se dilater plus que la doublure, en particulier s'il est en aluminium, la dilatation de la dépression est plus proche de celle de la peau de sorte que la doublure suit plus facilement la peau.

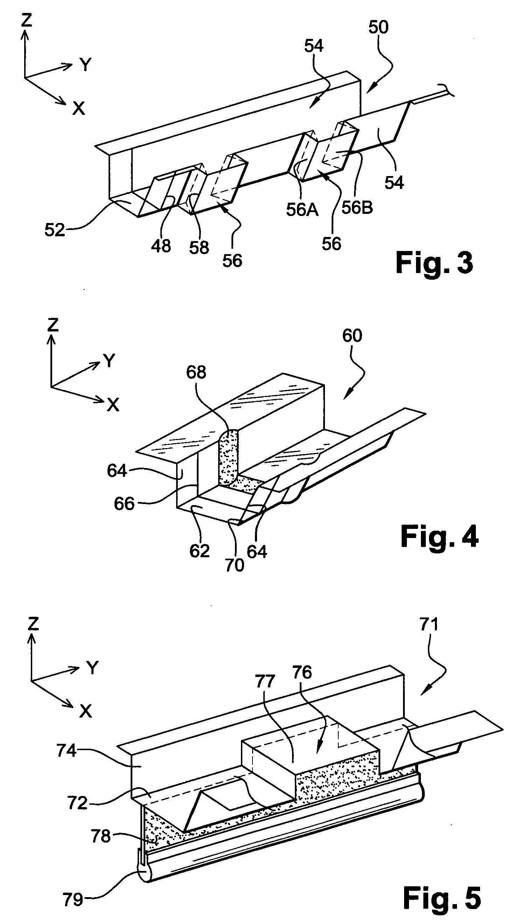

On a représenté sur la figure 3 une dépression 50 d'une doublure de capot de véhicule automobile selon un deuxième mode de réalisation de l'invention.

Comme la dépression selon le premier mode de réalisation, la dépression 50 s'étend essentiellement selon la direction transversale du capot. Elle a une section transversale en forme de "U" et comprend notamment une paroi de fond 52 et deux parois latérales 54.

On définit à partir du corps creux une surface d'enveloppe ayant une section transversale en "U" de référence 48 telle que représentée sur la figure 3 et suivant une ligne directrice de la dépression, une telle ligne directrice étant représentée en pointillé à la figure 1A.

Cette dépression comprend, sur une de ses parois latérales 54, deux reliefs en creux 56 tels que vus depuis l'intérieur de la dépression. Ainsi, la partie de la dépression superposée à la surface d'enveloppe comprend deux orifices, correspondant aux emplacements en lesquels sont ménagés les reliefs sur la dépression.

Chacun des deux reliefs présente une section transversale selon le plan X-Y en "U", et forme une singularité de forme de la dépression. La direction longitudinale de ces reliefs est essentiellement perpendiculaire à la direction longitudinale de la dépression, et correspond notamment à une direction verticale lorsque la doublure est montée en position fermée sur le véhicule. Chaque relief comprend en particulier une paroi de fond plane 56B et deux parois latérales également planes 56A et présente des arêtes 58 s'étendant essentiellement selon la direction verticale.

Ainsi, la paroi latérale 54 de la dépression présente une forme en créneau. Une telle forme permet de faciliter la déformation de la dépression, puisque les reliefs 56 peuvent plier et/ou se déplier au niveau des arêtes 58. En outre, la rigidité du capot n'est pas diminuée de façon significative.

On va maintenant décrire une doublure selon un troisième mode de réalisation de l'invention en référence à la figure 4.

La dépression 60 de la doublure est de forme semblable à celle des premier et second modes de réalisation, c'est-à-dire qu'elle est de forme essentiellement allongée et a une section transversale en "U". Elle comporte en outre une paroi de fond 62 et deux parois latérales 64. Comme précédemment, on définit à partir de cette dépression une section de référence 66 en "U" et suivant la ligne directrice de la dépression.

Cette dépression comprend également un relief en creux 68 formant une singularité de forme de la dépression. Ce relief est ménagé sur toute la dimension transversale d'une paroi latérale à l'autre, soit sur toute la dimension transversale de la paroi de fond 62 et également sur les parois latérales 64 de la dépression.

Ce relief est en forme de rainure ou de gouttière s'étendant perpendiculairement à la direction longitudinale de la dépression et ayant une section transversale selon le plan Y-Z sur la paroi de fond et X-Y sur les parois latérales, formant une portion de cercle. Il est conformé de telle sorte que la partie de la dépression qui est superposée à la surface d'enveloppe est interrompue dans la partie comprenant le relief 68.

Ce relief 68 est contigu aux lignes ou angles rentrants 70 de la dépression marquant la limite entre la paroi de fond 62 et les parois latérales 64 et intersecte ceux-ci, de sorte que ces lignes ne sont pas rectilignes.

On a décrit sur la figure 5 une dépression d'une doublure selon un quatrième mode de réalisation de l'invention. Une telle dépression 71 est de forme générale allongée et présente une section transversale en "U". Elle comprend une paroi de fond 72 et deux parois latérales 74. Elle comprend également un relief 76 en saillie de la paroi de fond 72 et formant une singularité de forme du corps creux. Ce relief forme, comme dans le deuxième mode de réalisation, un créneau. Il s'étend dans la dépression de sorte qu'une paroi 77 du relief, essentiellement parallèle à la paroi de fond 72 de la dépression, soit plus proche de la peau lorsque la doublure et la peau sont assemblées que la paroi 72 de fond de la dépression.

La doublure comprend également en saillie de la paroi de fond 72 de la dépression une nervure 78 essentiellement perpendiculaire à la paroi de fond, parallèle à sa direction longitudinale et s'étendant verticalement et vers le bas lorsque le capot est assemblé sur le véhicule. Cette nervure comprend à son extrémité libre un joint d'étanchéité 79, destiné à reposer sur au moins un élément du compartiment moteur lorsque le capot est agencé sur le véhicule. Ce joint d'étanchéité 79 permet d'isoler le capot de l'habitacle du véhicule lorsque la dépression est placée sur le capot comme la dépression 14 sur le capot de la figure 1. En outre, comme la nervure s'appuie sur les pièces du compartiment moteur, elle permet de limiter l'affaissement du corps creux sous l'effet de son poids propre, phénomène qui intervient lorsque le capot est porté à haute température, par exemple lors de la cataphorèse.

On va maintenant décrire encore un autre mode de réalisation de l'invention, représenté sur la figure 6.

Dans ce mode de réalisation, la doublure comprend une dépression 90 ayant une forme semblable à celle des autres dépressions, c'est-à-dire s'étendant essentiellement selon une direction principale et ayant une section en "U". Elle comprend une paroi de fond 92 et deux parois latérales 94.

Cette dépression comprend une première portion 96 en matière plastique, par exemple en SMC, présentant un orifice 97 ménagé sur la paroi de fond 92 de celle-ci.

L'invention n'est pas limitée aux modes de réalisation présentés ci-dessus.

En effet, la peau et la doublure peuvent être réalisées en d'autres matériaux que ceux décrits. La doublure peut par exemple être réalisée en un matériau thermoplastique à base de polyamide ou de polypropylène, éventuellement renforcé de fibres de verre .La peau peut être réalisée dans un autre matériau métallique que ceux décrits, ou également en matière plastique. La doublure et/ou la peau peuvent également être réalisées à l'aide d'un matériau hybride comprenant du plastique et du métal, et éventuellement du carbone ou du magnésium.

La peau peut également être réalisée en matériau thermoplastique et la doublure en un matériau métallique, la peau se dilatant moins que la doublure. Dans ce cas, la doublure peut comprendre une singularité de matériau, la deuxième portion de matériau étant réalisée en un matériau qui se dilate moins que la peau.

En outre, la forme des dépressions n'est pas limitée à celles décrites, de même que leur emplacement par rapport au capot. Les dépressions peuvent par exemple avoir une section en "V", et/ou s'étendre essentiellement selon la direction longitudinale du capot.

De plus, la forme des reliefs, leur emplacement ou leur répartition n'est pas non plus limitée à celles décrites. Ceux-ci peuvent par exemple présenter une section en "V" ou en accordéon. La forme des orifices n'est pas non plus limitée à celles décrites. Ceux-ci peuvent être ménagés sur une unique paroi, par exemple.

De même, la portion métallique peut être ménagée à la fois sur une partie du fond 92 de la dépression et une partie d'au moins une paroi latérale 94 de la dépression, en ayant par exemple une forme complémentaire de l'orifice 36A, 36B représenté sur la figure 1B. La portion métallique est alors issue d'emboutissage ou pliée et formée par le moule de réalisation de la doublure plastique.

En outre, le nombre des reliefs ou des orifices n'est pas limitée à ce qui a été décrit ci-dessus. En particulier, il est avantageux que la dépression présente au moins trois singularités pour faciliter la déformation de la doublure. Ces éléments peuvent également être présents en combinaison sur la doublure.

Lorsque la dépression présente au moins un relief, elle peut en outre présenter une première épaisseur au niveau de la partie superposée à la surface d'enveloppe, contigu au relief, et une deuxième épaisseur moins importante dans la partie formant le relief, notamment au niveau des arêtes, ce qui facilite encore la déformation de la doublure.

Il est également à noter que le ou les renforts métalliques présents dans la doublure peuvent être de toute autre forme que ceux décrits ou être mis en place à d'autres endroits que ceux décrits. Un unique renfort métallique peut par exemple s'étendre sur toute la longueur de la dépression 14, etc.

## Revendications

1. Doublure de capot pour véhicule (10) présentant au moins une dépression allongée (14 ; 40 ; 60 ; 71 ; 90) de préférence le long d'un bord de la doublure, la dépression présentant, à distance de ses extrémités, au moins une singularité (36A ; 36B ; 56 ; 68 ; 97) ne se reproduisant pas à la fois à l'identique et de façon continue sur toute la longueur de la dépression, caractérisée en ce ladite singularité est une singularité de matériau, la dépression comprenant notamment une première portion, réalisée en un premier matériau et définissant au moins un orifice, et une deuxième portion, réalisée en un deuxième matériau différent du premier et surmoulée dans au moins un des orifices.

2. Doublure selon la revendication précédente, dans laquelle la singularité est une singularité de forme, la dépression étant de préférence conformée de sorte que, si on définit une surface enveloppe suivant la dépression et ayant une section transversale (48 ; 66) de référence constante, la partie de la dépression superposée à l'enveloppe présente au moins une interruption ou un orifice.

3. Doublure selon l'une quelconque des revendications précédentes, dans laquelle au moins une paroi de la dépression présente au moins un orifice (36A ; 36B), et, notamment lorsque la dépression présente deux parois (22, 24), l'orifice interrompt une ligne située à l'intersection de deux parois.

4. Doublure selon l'une quelconque des revendications précédentes, dans laquelle au moins une paroi (54 ; 62 ; 64 ; 72) de la dépression comprend au moins un relief en saillie ou en creux (56 ; 68 ; 77), le relief comprenant en particulier au moins une arête ou un angle rentrant (58) et étant de préférence conformé en créneau.

5. Doublure selon la revendication précédente, dans laquelle la dépression comprend au moins deux parois (62 ; 64) et une ligne (70) à l'intersection de ces deux parois, le relief (68) étant contigu à la ligne.

6. Doublure selon l'une des revendications précédentes, dans laquelle le premier matériau est un matériau plastique, notamment choisi parmi un matériau thermodurcissable tel que le SMC (Sheet Moulding Compound) et un matériau thermoplastique à base de polypropylène ou de polyamide et éventuellement renforcé de fibres de verre, et/ou le deuxième matériau est choisi parmi un matériau métallique, tel que l'aluminium ou l'acier, un matériau plastique distinct du premier matériau et un matériau composite métal-plastique, comprenant éventuellement du carbone ou du magnésium..

7. Doublure selon l'une quelconque des revendications précédentes, dans laquelle la dépression (14) s'étend essentiellement selon une direction transversale de la doublure, de préférence le long de son bord arrière.

8. Capot de véhicule, **caractérisé en ce qu'**il comprend :
- une doublure (10) conforme à l'une quelconque des revendications précédentes, une peau (30) réalisée en un matériau métallique tel que de l'aluminium ou l'acier ou un matériau hybride métal/plastique.

## Patentansprüche

1. Auskleidung für die Motorhaube eines Kraftfahrzeugs (10), die mindestens eine langgezogene Vertiefung (14; 40; 60; 71; 90) vorzugsweise entlang eines Randes der Auskleidung aufweist, wobei die Vertiefung, im Abstand von ihren Enden, mindestens eines Singularität (36A; 36B; 56; 68; 97) aufweist, die sich über die gesamte Länge der Vertiefung nicht zugleich identisch und durchgängig nachbildet, **dadurch gekennzeichnet, dass** die Singularität eine Materialsingularität ist, wobei die Vertiefung insbesondere einen ersten Teil umfasst, der aus einem ersten Material realisiert ist und mindestens eine Öffnung definiert, und einen zweiten Teil umfasst, der aus einem zweiten, von dem ersten Material verschiedenen Material realisiert ist und in mindestens einer der Öffnungen geformt ist.

2. Auskleidung nach dem vorhergehenden Anspruch, wobei die Singularität eine Formsingularität ist, wobei die Vertiefung vorzugsweise so ausgebildet ist, dass, wenn eine Mantelfläche entlang der Vertiefung definiert wird, die einen Querschnitt mit konstantem Bezugspunkt (48; 66) hat, der Teil der Vertiefung, der die Umhüllende überlagert, mindestens eine Unterbrechung oder eine Öffnung aufweist.

3. Auskleidung nach einem der vorhergehenden Ansprüche, wobei mindestens eine Wand der Vertiefung mindestens eine Öffnung (36A; 36B) aufweist und, insbesondere wenn die Vertiefung zwei Wände (22, 24) aufweist, die Öffnung eine Linie unterbricht, die sich an der Verschneidung von zwei Wänden befindet.

4. Auskleidung nach einem der vorhergehenden Ansprüche, wobei mindestens eine Wand (54; 62; 64; 72) der Vertiefung mindestens eine erhöhte oder vertiefte Unebenheit (56; 68; 77) umfasst, wobei die Unebenheit insbesondere mindestens eine Kante oder einen rückspringenden Winkel (58) aufweist und vorzugsweise zinnenartig geformt ist.

5. Auskleidung nach einem der vorhergehenden Ansprüche, wobei die Vertiefung mindestens zwei Wände (62; 64) und eine Linie (70) an der Verschneidung dieser zwei Wände aufweist, wobei die Unebenheit (68) an die Linie angrenzt.

6. Auskleidung nach einem der vorhergehenden Ansprüche, wobei das erste Material ein Kunststoff ist, der insbesondere ausgewählt ist aus einem wärmehärtbaren Material wie SMC (Sheet Moulding Compound) und einem thermoplastischem Material auf Basis von Polypropylen oder Polyamid und gegebenenfalls glasfaserstärkt ist, und/oder das zweite Material ausgewählt ist aus einem metallischen Werkstoff wie Aluminium oder Stahl, einem Kunststoff, der von dem ersten Material verschieden ist, und einem Metall-Kunststoff-Verbundstoff, der gegebenenfalls Kohlenstoff oder Magnesium enthält.

7. Auskleidung nach einem der vorhergehenden Ansprüche, wobei die Vertiefung (14) sich im Wesentlichen in einer Querrichtung der Auskleidung erstreckt, vorzugsweise entlang von deren hinterem Rand.

8. Motorhaube eines Kraftfahrzeugs, **dadurch gekennzeichnet, dass** sie Folgendes umfasst:
- eine Auskleidung (10) nach einem der vorhergehenden Ansprüche, eine Haut (30), die aus einem metallischen Werkstoff realisiert ist wie Aluminium oder Stahl oder einem Metall-Kunststoff-Hybridmaterial.

## Claims

1. A vehicle hood lining (10) presenting at least one elongate depression (14; 40; 60; 71; 90), preferably along an edge of the lining, the depression presenting, at a distance from its ends, at least one singularity (36A; 36B; 56; 68; 97) that is not reproduced both identically and continuously all along the length of the depression, characterized it that it said singularity is a material singularity, the depression comprising at least a first portion made of a first material and defining at least one orifice, and a second portion made of a second material different from the first material and overmolded in at least one of the orifices.

2. A lining according to the preceding claim, wherein the singularity is a shape singularity, the depression preferably being shaped in such a manner that, if an envelope surface is defined along the depression and having a reference cross-section (48; 66) that is constant, then the portion of the depression that is superposed on the envelope presents at least one interruption or orifice.

3. A lining according to the preceding claims, wherein at least one wall of the depression presents at least one orifice (36A; 36B), and in particular when the depression presents two walls (22; 24), the orifice interrupts a line situated at the intersection between two walls.

4. A lining according to the preceding claims, wherein at least one wall (54; 62; 64; 72) of the depression includes at least one projecting or recessed portion (56; 68; 77) in relief the portion in relief including in particular at least one edge or reentrant corner (58), and preferably being in the shape of a crenellation.

5. A lining according to the preceding claim, wherein the depression includes at least two walls (62; 64), and a line (70) at the intersection between said two walls, the portion in relief (68) being contiguous with the line.

6. A lining according to the preceding claims, wherein the first material is a plastics material, in particular a material selected from a thermosetting material such as sheet molding compound and a thermoplastic material based on polypropylene or on polyamide, optionally reinforced with glass fibers, and/or the second material is selected from a metallic material, such as aluminum or steel, a plastics material distinct from the first material, and a metal-plastics composite material, optionally including carbon or magnesium.

7. A lining according to the preceding claims, wherein the depression (14) extends essentially in a transverse direction of the lining, preferably along its rear edge.

8. A vehicle hood, **characterized in that** it comprises:
· a lining (10) in accordance with preceding claims; and
· a skin (30) made of a metal material such as aluminum or steel or a metal/plastics hybrid material.
